# EUROPEAN PATENT SPECIFICATION

(11) **EP 0 405 066 B1**
(45) Date of publication and mention of the grant of the patent: **11.01.1995**
(21) Application number: 90106291.9
(22) Date of filing: 02.04.1990
(51) Int. Cl.: H01B 13/14, B29C 47/88

(54) **A covered-cable production system**
Produktionseinrichtung für isoliertes Kabel
Système pour fabriquer un câble isolé

(30) Priority: 28.06.1989 JP 166115/89
(43) Date of publication of application: 02.01.1991
(73) Proprietor: NIHON KOGYO SHIZAI CO., LTD., Osaka-shi, Osaka-fu (JP)
(72) Inventor: Nishida, Minoru, c/o Nihon Kogyo Shizai Co., Ltd., Osaka-shi, Osaka-fu (JP)
(74) Representative: Füchsle, Klaus, Dipl.-Ing.

(56) References cited:
- GB-A- 1 567 342
- JP-A-63 252 320

## Description

### BACKGROUND OF THE INVENTION

The present invention relates generally to a system of producing a covered cable according to the preamble part of claim 1, the covered cable being e.g. a high-voltage electric cable, which consists of a central conductor and an outer layer of insulating-material like rubber applied to the surface of the conductor, and more particularly to an improvement in a system of such nature wherein the conductor to be covered with a layer of viscous material like raw rubber is conveyed onward in a not vertical but sideways course during the process of applying and finishing the covering layer.

A covered-cable production system according to the preamble part of claim 1 is known from GB-A-1 567 342. This reference discloses a covered-cable production system comprising a starting wheel, a covering layer extruder in the form of an extrusion press, a vulcanization pipe, water cooling means, water seal-in apparatus, a reel-up apparatus in the form of a receiving reel, and twisting means.

The twisting means of the known system, however, is only adapted for keeping a plurality of conductors of a double cable to be coated with a sheath in a tight, dense condition. Since the conductors can be loosened, the twisting means are not adapted for preventing the deformation of the covering layer of the cable. Therefore, a sheath cannot be well-formed onto the conductors without deformation.

In addition, the twisting means of the system known from GB-A-1 0567 342 comprises a pair of continuous belts which are arranged crosswise in relation to each other and form an equal angle in relation to the cable so as to twist the latter. The belts are disposed at a fixed position, respectively, so that the cable may be twisted downstream of the twisting means in a degree where the conductors are never lose but the cable is not certain to be axially rotated over the entire length of the tube.

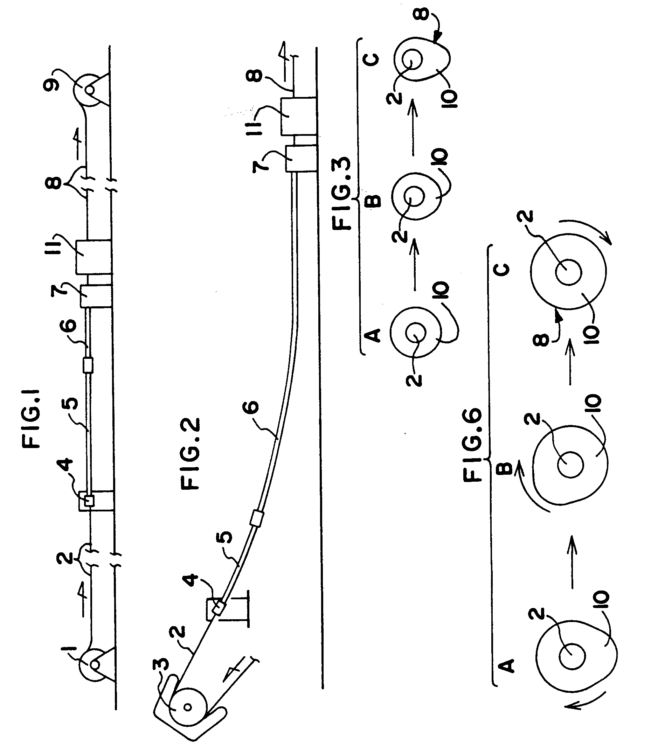

In another prior production system of a covered cable (see e.g. JP-A- 55-115214), of which the description is made for convenience by the use of Figs. 1 and 2 illustrative of the embodiment of the present invention, a central conductor 2 of several wires stranded together or a single wire is supplied from a supply drum 1, and then conveyed forwards to a covering layer extruder 4 directly in a horizontal straight-course as shown in Fig. 1, or indirectly by way of a raising roller 3 in a downwards curved course as shown in Fig. 2. This type of such a system is called hereinafter as a sideways conveyance type. The conductor 2 is covered in the inside of the extruder 4, with a given thickness of extruded viscous layer of insulating-material such as natural or synthetic rubber in an unvulcanized condition. Next, the not yet finished cable of the conductor 2 with the unvulcanized layer is conveyed further into a vulcanization pipe 5 and subsequently a water cooling pipe 6, wherein the covering layer on the conductor is subjected to the treatment of vulcanization and solidification due to cold water. Finally, the so finished cable with the vulcanized layer is conveyed to a reel-up drum 9 through a water seal-in apparatus 7 which is connected and communicated with the end of the water cooling pipe 6, and is wound up by the reel-up drum 9 in the terminal of production line.

According to the covered cable production system so constructed as described above, the covering layer or covering material which is applied surroundingly to the central conductor 2 by the extruder 4 is liable to fall downwards from the conductor by gravity prior to the solidification of the covering material, since the conductor 2 is conveyed sideways in relation to the perpendicular direction during the process of covering and finishing. Generally, such a possiblity becomes greater in proportion to the increased thickness of the covering layer. Specifically, in the case of producing a covered cable with a relatively thick layer 10 as shown in Fig. 3, the extruded layer 10(Fig. 3A), which is applied surroundingly and concentrically to the central conductor 2 by the extruder 4, is deformed gradually in a downwards protruding shape as shown in Fig. 3B by gravity while being passed through the vulcanization pipe 5 and water cooling pipe 6. Consequently, the covered cable having an irregular thickness of deformed layer as shown in Fig. 3C is produced after the process of covering and finishing.

To avoid such a disadvantage in producing a covered cable with a relatively thick layer, the other production system called hereinafter as a perpendicular type have hitherto been used necessarily which is so designed as to perpendicularly convey a central conductor during the process of covering and finishing lest the layer to be applied should be influenced in radial directions of the conductor by gravity. As compared with the preceding first production system of the sideways conveyance type, however, this production system of the perpendicular conveyance type is relatively low in productivity, and always requires a tall factory and an eventually high cost to increase the productivity.

To solve the problems pointed out with respect to both of the known types of covered cable production systems described above, the same applicant of the present invention has formerly proposed an improved covered-cable production system of the sideways conveyance type disclosed in Japanese Unexamined Patent Publication No.63-252,320, which is used with combination to a conductor rotation drive apparatus so designed as to axially rotate a central conductor to be conveyed to the covering layer extruder 4, while admitting of the longitudinal movement of the conductor. The conductor rotation drive apparatus are arranged so as to precede the covering layer extruder 4 in the production line, and the central conductor is gripped-directly and rotated axially by pairs of opposed rollers. However, it is difficult to rotate the conductor over a long distance steadily and smoothly without giving rise to a slip, since the conductor is formed of hard and slippery copper wire extending continously or the like. For this reason, a great number of pairs of opposed rollers may be juxtaposed for the sound rotation of the conductor, but there is a problem of disposition space. Furthermore, when numbers of pairs of rollers are forced to grip the conductor more firmly, the axial conveyance of the conductor is likely to become slower.

### OBJECT AND SUMMARY OF THE INVENTION

It is therefore an object of the present invention to provide a covered-cable production system according to the preamble part of Claim 1 which can continuously and smoothly produce a cable covered surroundingly with a relatively thick layer that has no deformation caused by gravity.

The solution of this object is achieved by the features of Claim 1.

Specifically, in order to cause a central conductor of an eventually covered cable to rotate axially during the process of covering and finishing a covering layer, the covered cable production system of the present invention employs a method of gripping and rotating axially and integrally a solidified covering layer which is fastened on the central conductor of an onwards conveyed portion of a finished covered-cable, and has a larger diameter and a relatively unhardened surface of a relatively great value of coefficient of friction. As a result, according to the present invention, the indirect rotation of the central conductor can be made steadily by a moderate gripping force without giving rise to a slip, in comparison with the case of using the prior method of directly gripping and rotating the central conductor axially. Accordingly, the present invention can lead to compactness and low cost of the corresponding apparatus for rotating axially the central conductor.

For a more complete understanding of the features and advantages of the invention, reference should be made to the following description of a preferred embodiment and to the accompanying drawing.

### BRIEF DESCRIPTION OF THE DRAWINGS

Fig. 1 is a diagramatic side view showing the main units in a sideways or horizontal conveyance type of a covered cable production system in accordance with the present invention;
Fig. 2 is a diagramatic side view showing the main units in a sideways or partially arcuate conveyance type of a covered cable production system in accordance with the present invention;
Fig. 3 is an explanatory view of the course of a deformation-by-gravity in a covering layer applied surroundingly to the central conductor of a covered cable;
Fig. 4 is a longitudinal sectional view of a covered-cable axial rotation drive apparatus of the present invention;
Fig. 5 is a transverse sectional view of the same apparatus; and
Fig. 6 is an explanatory view showing that the same apparatus reforms the deformation-by-gravity found in the covering layer on the central conductor of a covered cable.

### DETAILED DESCRIPTION OF THE PREFERRED EMBODIMENT

Referring first to Figs. 1 and 2, the embodied system of the present invention is arranged, in the advance direction of a single wire or stranded wires of a central conductor 2 of the eventually covered cable 8, by the following units or parts, i.e., a supply drum 1; a raising roller 3 optionally used in the case of conveying the conductor aslant during the process; a covering layer extruder 4 for concentrically covering the bare conductor 2 with an extruded unvulcanized-layer; a vulcanization pipe 5; a water cooling pipe 6; a water seal-in apparatus 7 connected and communicated with the end of the water cooling pipe 6, for preventing the leakage of the cold water inside the water cooling pipe 6; a covered-cable axial rotation drive apparatus 11 provided next to the above-mentioned water seal-in apparatus 11, for rotating a covered cable 8 on its axis while admitting of the longitudinal movement of the cable; and a reel-up drum 9.

The central conductor 2 is continously supplied from the supply drum 1 directly or indirectly through the raising roller 3 to the covering layer extruder 4, and therein is covered concentrically on the surface with a given thickness of extruded viscous layer 10 in an urnvulcanized condition of insulating-material such as natural or synthetic rubber to be vulcanized. Thence, the conductor covered with the unvulcanized layer is conveyed into the vulcanization pipe 5 wherein the covering layer is vulcanized so as to have the property of rubber, and furthermore the conductor covered with the vulcanized layer is conveyed subsequently into the water cooling pipe 6 wherein the covering layer is cooled and solidified with cold water. The central conductor covered with the layer, i.e. the covered-cable 8, which is finished in such a way, is conveyed through the covered-cable axial rotation drive apparatus 11 to the reel-up drum 9 by which the covered cable is dragged and wound up as a finished product.

In the axial rotation drive apparatus 11, the covered cable 8 forwarded from the water seal-in apparatus 7 is nipped partially at the opposite side faces of the layer with some opposed sets 18a, 18b of pressure rollers of roller assemblies 15A, 15B, 15C described later in details, and so is rotated on the axis integrally with the solidified layer, pursuant to the rotation of the rollers round the axis of the cable. The axial rotation of the covered cable in the rotation drive apparatus 11 travels over the central conductor which is being conveyed in the vulcanization pipe 5 and the water cooling pipe 6 for the process of finishing the covering layer, while the unvulcanized and viscous layer which is extruded by the extruder 4 and applied to the central conductor is caused to rotate integrally with the central conductor. Accordingly, the layer is subjected to the treatment of vulcanization and solidification in a state where the layer keeps a circular shape in section concentric with the central conductor without the deformation of the layer due to gravity. The rotation velocity of the covered cable is set to 0.5-1.5 r.p.m (revolutions per minute), more preferably to 0.5-0.7 r.p.m in practice, since too fast a rotation of the covered cable causes convolution.

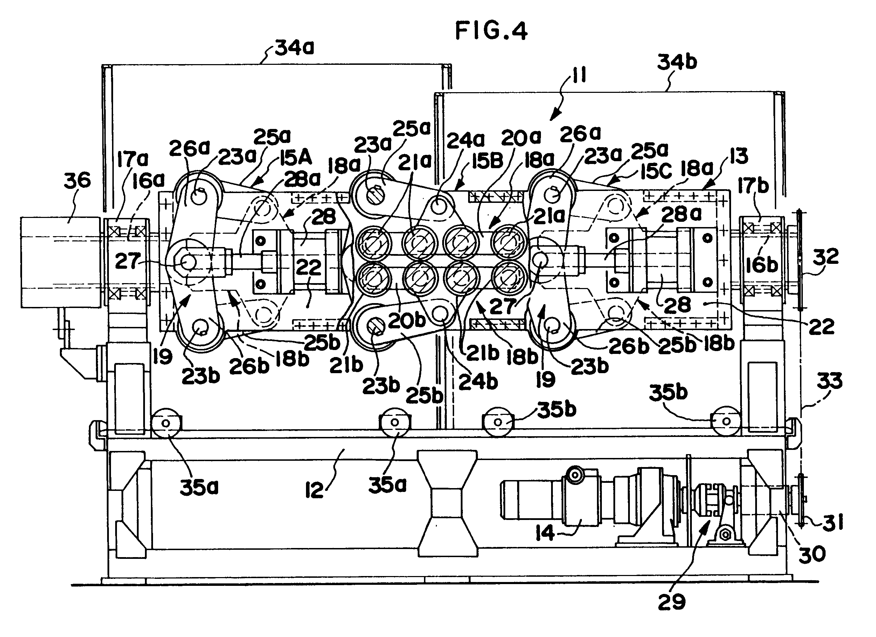

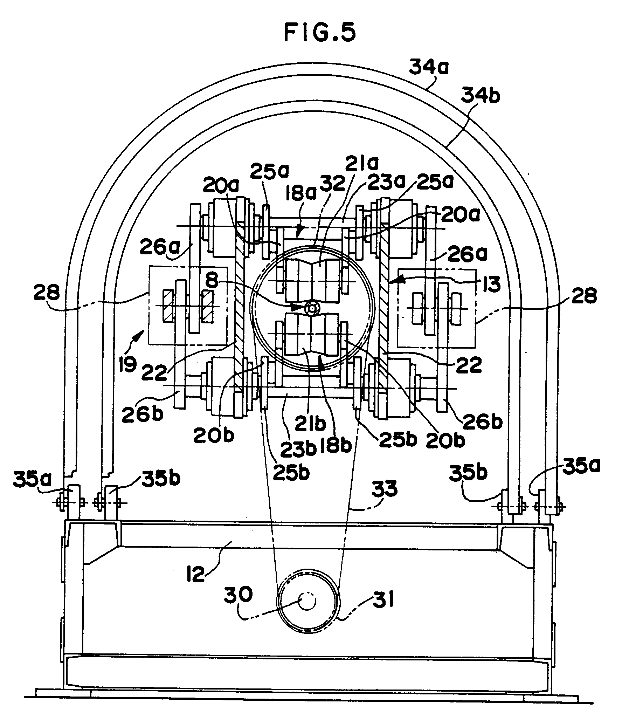

Referring more particularly to Figs. 4 and 5, the covered-cable axial rotation drive apparatus 11 mainly comprises a united rotation construction 13 for rotating the covered cable on the axis, and a drive motor 14 with a decelerator for causing the rotation construction 13 to move round the axis. The rotation construction 13 has each sleeve 16a, 16b at the opposite terminals thereof, and is horizontally supported on a framework rotatably by way of bearings 17a, 17b. The reference numerals 12 and 34a, 34b denotes a supporting table of the framework and a pair of movable casings capable of sliding on the table 12 by way of castors 35a, 35b. The above-mentioned rotation construction 13 is formed in one body by three of roller assemblies 15A, 15B, 15C having the same construction which are arranged horizontally in sequence on a pair of elongated side boards 22 parallel to each other. Each of the roller assemblies includes a pair of opposed sets 18a, 18b of rollers, and a shifting mechanism 19 for adjusting a gap between the opposed sets 18a, 18b of rollers. The opposed sets 18a, 18b of rollers are disposed between the parallel side boards 22, and have a plurality of regularly spaced pressure rollers 21a, 21b in each set shaped like a waisted cylinder respectively which are pivoted rotatably at supporting sideplates 21a, 21b.

The above-mentioned shifting-mechanism 19 in each of roller assemblies 15A, 15B, 15C includes a linkage and a hydraulic cylinder 28 arranged in the right and left sides, so as to enable both the opposed sets 18a, 18b of rollers to shift nearer to or farther from one another. In details, both the opposed sets 18a, 18b of rollers are connected by a pair of linkages 25a, 25b, 26a, 26b to the exterior end portions of the piston rods 28a of the cylinders 28... which are arranged respectively in right and left sides. The linkage in every side is a combination of two upper and lower levers 25a, 25b, and two upper and lower connecting-arms 26a, 26b. One ends of the upper and lower levers 25a, 25b are connected, by way of pins 24a, 24b, respectively with ear-shaped portions of the supporting side plates 21a, 21b of both the roller sets 18a, 18b, while the other ends of the levers 25a, 25b are fixed firmly to upper and lower rotatable shafts 23a, 23b respectively which are rotatably supported on the upper and lower portions of the side boards 22... of the united rotation construction 13 respectively. On the other hand, the upper and lower connecting arms 26a, 26b have one ends thereof fixed firmly to the outside extending portions of the rotatable shafts 23a, 23b, and have the other ends connected together with one other by a coupling pin 27. Furthermore, the coupling pin 27 connects the other ends of the upper and lower arms 26a, 26b and the exterior end portion of the piston rod 28a of the cylinder 28. The hydraulic cylinders 28 of the roller assemblies 15A, 15B, 15C are operated by a pressure fluid which is fed through a fluid coupling 36, an inlet pipe and an outlet pipe from a fluid pressure source (not shown respectively in the drawings) arranged on the ground.

In the operation of the roller assemblies 15A, 15B, 15C, the propulsion of the piston rods 28a of the cylinders 28 in both sides causes upper series (of connecting arm 26a, rotatable shaft 23a, lever 25a and supporting side plate 20a) to move clockwise, and causes lower series (of connecting arm 26b, rotatable shaft 23b, lever 25b and supporting side plate 20b) to move anticlockwise, whereby both the opposed sets 18a, 18b of rollers or the opposite pressure rollers 21a, 21b come nearer to one another. On the other hand, the drawing of the above-mentioned piston rods 28a into the cylinders 28 in both sides causes the upper series (26a, 23a, 25a and 20a) to move anticlockwise, and causes the lower series (26b, 23b, 25b and 20b) to move clockwise, whereby both the opposed sets 18a, 18b of rollers or the opposite pressure rollers 21a, 21b go away from one another. The covered cable 8 is nipped under a moderate gripping force with the upper rollers 21a and the lower rollers 21b opposite to each other as illustrated in Fig. 5, when the piston rods 28a of the hydraulic cylinders 28 are propelled outwards by a given fluid pressure. However, in Fig. 4, the opposite upper and lower rollers 21a, 21b are in touch with one another, since the covered cable 8 is not not conveyed in the rotation construction 13.

The rotation construction 13 is connected to the drive motor 14 by a chain 33 which is passed around a sprocket wheel 31 fastened on a driven shaft 30 of the motor 14, and a sprocket wheel 32 fastened on the anterior sleeve 16b of the rotation construction 13. The reference numeral 29 denotes a clutch for connecting or disconnecting the driven shaft 30 and a rotating shaft of the motor 14.

In the operation of the covered-cable rotation drive apparatus 11, both the opposed roller sets 18a, 18b of three pairs in all in the roller assemblies 15A, 15B, 15C are firstly displaced away from one another by the drawing-in of the piston rods 28a of the cylinders 28, so as to form a space enough for the covered cable to pass freely between the mutually opposed roller sets 18a, 18b. In the next step where the covered cable is conveyed from the water seal-in apparatus 7 into the rotation construction 13, particularly being passed between three pairs of opposed sets 18a, 18b of rollers, these three pairs of both the opposed roller sets are made to come near to one another by the outward propulsion of the piston rods 28a of the cylinders 28, to nip the covered cable partially with the opposed pressure rollers 21a, 21b of each roller set. Then, the drive motor 14 with a decelerator is switched on in a state where the clutch 29 is engaged so as to transmit the rotation force of the motor 14 to the rotation construction 13 by way of the lower sprocket wheel 31, the chain 33 and the upper sprocket wheel 32, whereby the rotation construction 13 including the roller assemblies 15A, 15B 15C is axially rotated at a perferable rotation velocity. Accordingly, three pairs of opposed roller sets 18a, 18b are rotated axially in a state where the covered cable 8 is nipped partially with the opposed pressure rollers 21a, 21b of each roller set, so that the covered cable 8 also is rotated on the axis thereof. In addition, the opposed presser rollers 21a, 21b allow the covered cable to advance longitudinally, so that the covered cable 8 is drawn by and conveyed onward to the reel-up drum 9.

Thus, the central conductor 2 passing in the water cooling pipe 6, the vulcanization pipe 5 is also rotated axially with the covering layer 10 extruded and covered by the extruder 4. As a result, the layer 10 during the process of finishing keeps a circular shape in section concentric with the central conductor 10 without a deformation due to gravity, whereby it is possible to produce a continously regular and uniform covered-cable. Even if the unsolid layer on the conductor in the vulcanization pipe 5 has a downwards protrusion deformed by gravity as shown in Fig. 6A, such a deformation is reformed as shown in Figs. 6B and 6C, depending on the axial rotation of the central conductor, and finally the covered cable 8 with the concentric layer 10 can be obtained.

It should be understood, of course, that the specific form of the invention herein illustrated and described is intended to be representative only, as certain changes may be made therein without departing from the clear teachings of the disclosure. Accordingly, reference should be made to the following appended claims in determining the full scope of the invention.

## Claims

1. A covered-cable production system comprising: in sequence,
a covering layer extruder (4) for forming and applying an unvulcanized covering layer of insulating material such as rubber surroundingly to a continuously onwards conveyed central-conductor (2) of an eventual cable (8);
a vulcanization pipe (5) for vulcanizing the unvulcanized layer on the conductor (2) conveyed therein;
a water cooling pipe (6) for cooling with cold water and solidifying the vulcanized layer on the conductor (2) conveyed therein;
a water seal-in apparatus (7), connected and communicated with the end of the water cooling pipe (6), for preventing a leakage of the cold water inside the water cooling pipe (6);
a reel-up apparatus (9) for winding up the finished cable with the vulcanized and solidified covering layer;
characterized in that a covered-cable axial rotation drive apparatus (11) is provided next to the said water seal-in apparatus (7), which causes the covered cable (8) to rotate axially while admitting a longitudinal movement of the cable (8) wherein said covered-cable axial rotation drive apparatus (11) comprises a rotatable rotation construction (13) moved axially around the covered cable (8) conveyed therein, a roller assembly (15A,B,C) held by a linkage mechanism (25a,b, 26a,b) in the rotation construction, the roller assembly (15A,B,C) including a pair of opposed sets (18a, 18b) of pressure rollers (21a, 21b) for partially nipping and axially rotating the conveyed covered-cable (8) while admitting of the longitudinal movement of the cable, and the linkage mechanism adapted for adjusting a space between both the opposed sets of pressure rollers (21a, 21b).

2. A covered-cable production system as defined in Claim 1, wherein the linkage mechanism (25a,b, 26a,b) is operated by a hydraulic cylinder (28).

3. A covered-cable production system as defined in Claim 2, wherein a plurality of pairs of opposed sets of pressure rollers (21a, 21b) and a plurality of linkage mechanisms (25a,b, 26a,b) are arranged in relation to the conveyed covered-cable (8) in the said rotation drive apparatus (11).

4. A covered-cable production system as defined in Claim 1, wherein the covered cable (8) conveyed in the said rotation drive apparatus (11) is caused to rotate axially at a rotation velocity of 0.5 to 1.5 revolutions per minute.

## Patentansprüche

1. Anlage zur Herstellung ummantelter Kabel, umfassend: der Reihe nach
einen Mantelschichtextruder (4) zur Bildung und zum Aufbringen einer unvulkanisierte Mantelschicht aus Isoliermaterial, wie beispielsweise Kautschuk, in umgebender Beziehung auf einen fortlaufend weitertransportierten Mittelleiter (2) eines schließlich gebildeten Kabels (8);
ein Vulkanisationsrohr (5) zum Vulkanisieren der unvulkanisierten Schicht auf dem darin transportierten Leiter (2);
ein Wasserkühlrohr (6) zum Kühlen und Verfestigen der vulkanisierten Schicht auf dem darin transportierten Leiter mit kaltem Wasser;
eine mit dem Ende des Wasserkühlrohrs (6) verbundene und zusammenhängende Wassereinschlußvorrichtung (7) zum Verhindern eines Austretens des kalten Wassers innerhalb des Wasserkühlrohrs (6);
eine Aufwickelvorrichtung (9) zum Aufwickelnd des fertiggestellten Kabels mit der vulkanisierten und verfestigten Mantelschicht;
dadurch gekennzeichnet, daß der besagten Wassereinschlußvorrichtung (7) am nächsten eine axiale Drehantriebsvorrichtung (11) für das ummantelte Kabel vorgesehen ist, die bewirkt, daß sich das ummantelte Kabel (8) axial dreht, während sie eine Längsbewegung des Kabels (8) zuläßt, wobei die besagte axiale Drehantriebsvorrichtung (11) des ummantelten Kabels umfaßt: eine drehbare Drehkonstruktion (13), die axial um das darin transportierte Kabel (8) herumbewegt wird, eine von einem Gelenkverbindungsmechanismus (25a,b, 26a,b) in der Drehkonstruktion gehaltene Rolleneinheit (15A,B,C), wobei die Rolleneinheit (15A,B,C) ein Paar gegenüberliegender Gruppen (18a, 18b) von Druckrollen (21a, 21b) einschließt, um das transportierte ummantelte Kabel (8) teilweise einzuklemmen und axial zu drehen, während sie eine Längsbewegung des Kabels zuläßt, sowie den Gelenkverbindungsmechanismus, der zum Einstellen eines Zwischenraums zwischen den beiden gegenüberliegenden Gruppen von Druckrollen (21a, 21b) angepaßt ist.

2. Anlage zur Herstellung ummantelter Kabel nach Anspruch 1, dadurch gekennzeichnet, daß der Gelenkverbindungsmechanismus (25a,b, 26a,b) durch einen Hydraulikzylinder (28) betätigt wird.

3. Anlage zur Herstellung ummantelter Kabel nach Anspruch 2, dadurch gekennzeichnet, daß eine Mehrzahl von Paaren von gegenüberliegenden Gruppen von Druckrollen (21a, 21b) und eine Mehrzahl von Gelenkverbindungsmechanismen (25a,b, 26a,b) in Bezug auf das transportierte ummantelte Kabel (8) in der besagten Drehantriebsvorrichtung (11) angeordnet sind.

4. Anlage zur Herstellung ummantelter Kabel nach Anspruch 1, dadurch gekennzeichnet, daß man bewirkt, daß sich das in der besagten Drehantriebsvorrichtung (11) transportierte ummantelte Kabel (8) axial mit einer Drehgeschwindigkeit von 0,5 bis 1,5 Umdrehungen pro Minute dreht.

## Revendications

1. Système de fabrication d'un câble isolé comprenant en série :
- une extrudeuse (4) de couche de couverture afin de former et d'appliquer une couche de couverture non vulcanisée d'un matériau isolant tel que le caoutchouc pour entourer un conducteur central (2) d'un câble final (8), acheminé continuellement vers l'avant;
- une conduite de vulcanisation (5) pour vulcaniser la couche non vulcanisée présente sur le conducteur (2) qui est acheminé dans son intérieur;
- une conduite de refroidissement à l'eau (6) pour refroidir à l'eau froide et solidifier la couche vulcanisée sur le conducteur (2) qui est acheminé dans son intérieur;
- un dispositif d'étanchéité à l'eau (7), connecté et communiquant avec l'extrémité de la conduite de refroidissement à l'eau (6), afin d'éviter les fuites d'eau froide à l'intérieur de la conduite de refroidissement à l'eau (6);
- un dispositif de bobinage (9) pour enrouler le câble fini avec la couche de couverture vulcanisée et solidifiée;
caractérisé en ce qu'un dispositif (11) d'entraînement en rotation axiale du câble isolé est monté à proximité dudit dispositif d'étanchéité à l'eau (7), qui provoque la rotation axiale du câble isolé (8) tout en admettant le déplacement longitudinal du câble (8), où le dispositif (11) d'entraînement en rotation axiale du câble isolé comprend une construction rotative de mise en rotation (13) se déplaçant axialement autour du câble isolé (8) acheminé dans son intérieur, un ensemble à rouleaux (15A, B, C) maintenu par un mécanisme à biellettes (25a, b, 26a, b) dans la construction de mise en rotation, l'ensemble à rouleaux (15A, B, C) comportant une paire de jeux opposés (18a, 18b) de rouleaux de compression (21a, 21b) afin de saisir partiellement et de faire tourner axialement le câble isolé acheminé (8) tout en admettant le déplacement longitudinal du câble, et le mécanisme à biellettes est destiné à ajuster l'espace séparant les deux jeux opposés de rouleaux de compression (21a, 21b).

2. Système de fabrication d'un câble isolé selon la revendication 1, dans lequel le mécanisme à biellettes (25a, b, 26a, b) est actionné par un cylindre hydraulique (28).

3. Système de fabrication d'un câble isolé selon la revendication 2, dans lequel une multitude de paires de jeux opposés de rouleaux de compression (21a, 21b) et une multitude de mécanismes à biellettes (25a, b, 26a, b) sont disposés en relation avec le câble isolé acheminé (8) dans ledit dispositif d'entraînement en rotation (11).

4. Système de fabrication d'un câble isolé selon la revendication 1, dans lequel le câble isolé (8) acheminé dans ledit dispositif d'entraînement en rotation (11) est amené à tourner axialement à une vitesse de rotation de 0,5 à 1,5 tour par minute.
